# FASCICULE DE BREVET EUROPEEN

(11) **EP 2 830 931 B1**
(45) Date de publication et mention de la délivrance du brevet: **05.04.2017**
(21) Numéro de dépôt: 13712858.3
(22) Date de dépôt: 27.02.2013
(51) Int. Cl.: B62D 65/02

(54) **DISPOSITIF ET PROCEDE DE MANIPULATION ET DE POSITIONNEMENT D'UN PAVILLON ENTRE DEUX COTES DE CAISSE D'UN VEHICULE AUTOMOBILE**
VORRICHTUNG UND VERFAHREN ZUR HANDHABUNG UND POSITIONIERUNG EINES DACHABSCHNITTS ZWISCHEN ZWEI SEITEN EINER KRAFTFAHRZEUGKAROSSERIE
DEVICE AND METHOD FOR HANDLING AND POSITIONING A ROOF SECTION BETWEEN TWO SIDES OF A MOTOR VEHICLE BODY SHELL

(30) Priorité: 29.03.2012 FR 1252827
(43) Date de publication de la demande: 04.02.2015
(73) Titulaire: Peugeot Citroën Automobiles SA, 78140 Vélizy Villacoublay (FR)
(72) Inventeur: TOMAI, Claudio, RJ Porto Real (BR)
(74) Mandataire: Fosse, Danièle
(86) Numéro de dépôt international: PCT/FR2013/050402
(87) Numéro de publication internationale: WO 2013/144468

(56) Documents cités:
- EP-A2- 1 291 271
- WO-A1-2004/067363
- US-A- 4 033 033

## Description

La présente invention revendique la priorité de la demande française 1252827 déposée le 29 mars 2012.

La présente invention concerne un dispositif et un procédé de manipulation et de positionnement d'un pavillon entre deux côtés de caisse d'un véhicule, tel qu'un véhicule automobile.

Le document EP 1 291 271 A1 divulgue le préambule de la revendication 1.

Elle s'applique sur une ligne de production de véhicules lors du ferrage après avoir assemblé les côtés de caisse sur le soubassement d'un véhicule et avant de souder le pavillon aux côtés de caisse.

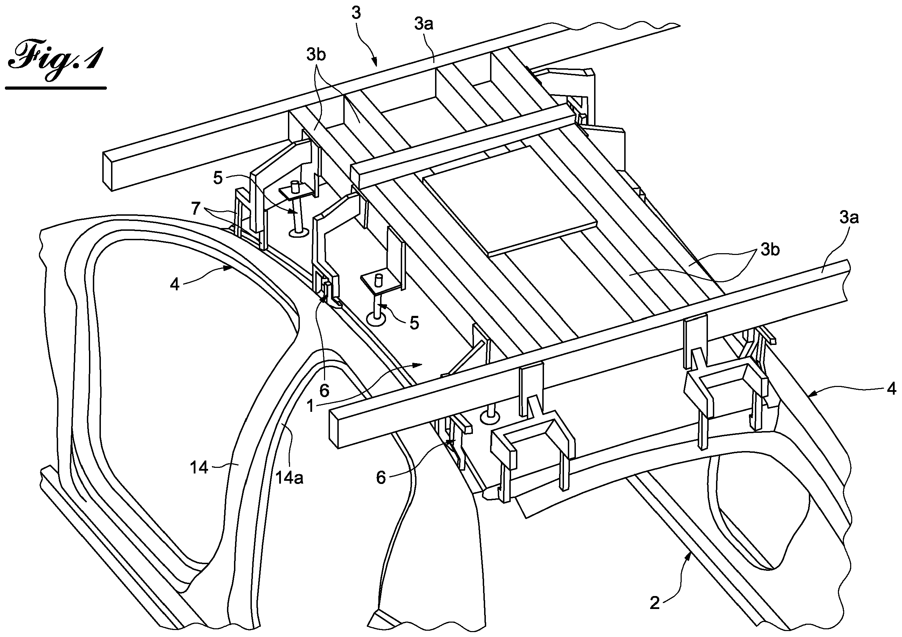

La figure 1 représente un dispositif permettant, à l'aide d'un robot (non représenté), de manipuler et positionner le pavillon 1 entre les deux côtés de caisse 2 d'un véhicule maintenus en position par un conformateur géométrique.

Ce dispositif comprend une structure 3 de support du pavillon 1 reliée à un bras du robot permettant de descendre le pavillon 1 et de le positionner entre les deux côtés de caisse 2 au niveau des bords supérieurs de leurs arches respectives 4.

La structure de support 3 peut être constituée par un ensemble de longerons et de traverses métalliques 3a, 3b comportant des ventouses verticales 5 de maintien du pavillon 1 sous la structure de support 3. Cette dernière comprend en outre de chaque côté de celle-ci plusieurs paires 6 de cales verticales 7 permettant de positionner suivant une direction transversale au véhicule le pavillon 1 relativement aux côtés de caisse 2. L'une des cales 7 de chaque paire 6, lors du positionnement par la structure de support 3 du pavillon 1 entre les deux côtés de caisse 2, vient en appui par son extrémité inférieure sur le flan vertical 8a d'une gorge d'enjoliveur correspondante 8 du pavillon 1 tandis que l'autre cale 7 vient en appui par son extrémité inférieure sur le flan vertical partant du bord supérieur de l'arche 4 du côté de caisse 2.

Cependant, les cales de réglage 7 sont amenées en appui sur des zones de contact peu rigides de chaque côté de caisse 2 et chaque gorge d'enjoliveur 9 du pavillon 1, pouvant conduire à une déformation de la tôle de ces zones d'appui et induire des défauts de positionnement transversal relatif du pavillon et des côtés de caisse ainsi qu'à des défauts d'aspect extérieur inesthétique du pavillon et de chaque côté de caisse.

La présente invention a pour but de pallier les inconvénients ci-dessus en proposant une solution permettant de positionner précisément le pavillon entre les côtés de caisse d'un véhicule tout en conservant une qualité d'aspect extérieur de ces pièces de carrosserie du véhicule.

A cet effet, selon l'invention, le dispositif de manipulation et de positionnement d'un pavillon entre deux côtés de caisse d'un véhicule, tel qu'un véhicule automobile, comprenant une structure mobile de support du pavillon permettant de positionner le pavillon entre les deux côtés de caisse au niveau des bords supérieurs de leurs arches respectives, est caractérisé en ce que la structure de support du pavillon comprend deux parties permettant de positionner transversalement le pavillon entre les deux bords supérieurs des arches de côtés de caisse en venant en appui sur deux zones rigides respectivement des deux côtés de caisse.

Chaque partie de positionnement transversal du pavillon comprend deux griffes rigides fixées à la structure de support du pavillon et venant en appui respectivement sur deux feuillures formant une zone rigide et situées de part et d'autre du pied milieu du côté de caisse correspondant lorsque la structure de support positionne le pavillon entre les deux bords supérieurs des arches de côtés de caisse.

Avantageusement, chaque paire de griffes rigides est fixée à l'extrémité d'un bras rigide solidaire de la structure de support du pavillon et s'étend sensiblement perpendiculairement à la structure de support.

Chaque grille comprend une partie rectiligne solidaire de l'extrémité du bras rigide correspondant en s'étendant sensiblement perpendiculairement à la structure de support et une partie d'extrémité inférieure recourbée intérieurement.

La structure de support du pavillon comprend en outre des cales verticales de positionnement transversal du pavillon venant en appui, pour chaque côté de caisse et le long de celui-ci, contre le bord supérieur de l'arche du côté de caisse et le flan d'une gorge d'enjoliveur du pavillon après que les deux parties de positionnement transversal du pavillon ont été amenées en appui sur les deux zones rigides respectives des deux côtés de caisse.

Le dispositif comprend avantageusement un robot de manipulation de la structure mobile de support du pavillon pour positionner le pavillon entre les deux bords supérieurs des arches des côtés de caisse du véhicule.

L'invention vise également un procédé de manipulation et de positionnement sur une ligne d'assemblage d'un pavillon entre deux côtés de caisse solidaires d'un soubassement d'un véhicule, tel qu'un véhicule automobile, utilisant le dispositif tel que défini précédemment et qui est caractérisé en ce qu'il consiste, à l'aide du robot, à déplacer et positionner la structure de support du pavillon au-dessus des deux côtés de caisse du véhicule, descendre la structure de support de manière à disposer le pavillon entre les deux bords supérieurs des arches de côté de caisse et amener les deux parties de positionnement en appui sur les deux zones rigides respectivement des deux côtés de caisse pour positionner transversalement le pavillon entre les deux bords supérieurs des arches des côtés de caisse.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en perspective représentant un dispositif de l'art antérieur permettant de manipuler et de positionner un pavillon entre deux côtés de caisse d'un véhicule ;
- la figure 2 est une vue en perspective semblable à celle de la figure 1 et montrant le dispositif de l'invention permettant un positionnement transversal précis d'un pavillon entre les deux côtés de caisse d'un véhicule ; et
- la figure 3 est une vue de dessus du dispositif de la figure 2.

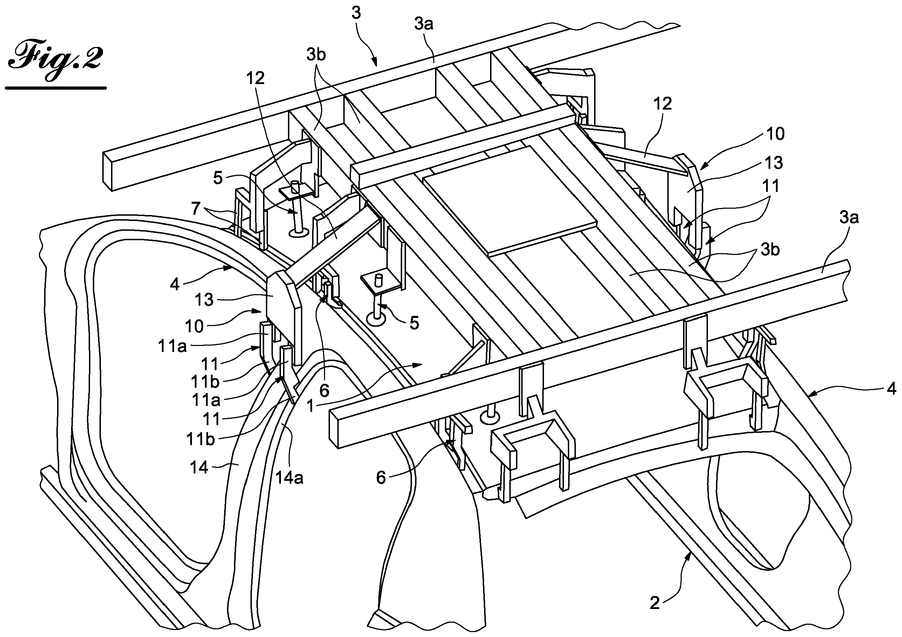

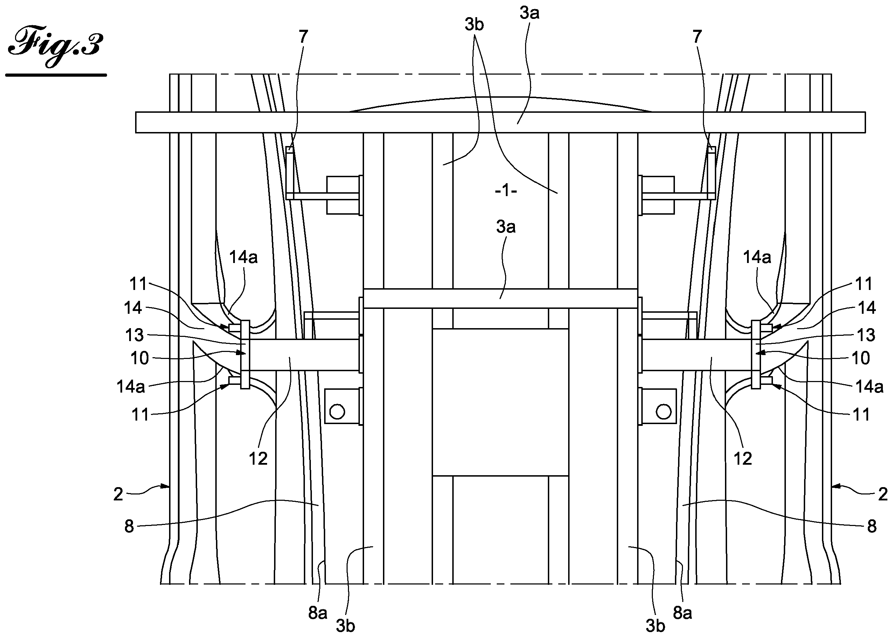

En se reportant aux figures 2 et 3, le dispositif de manipulation et de positionnement d'un pavillon 1 entre deux côtés de caisse 2 d'un véhicule automobile reprend les mêmes éléments que ceux décrits en référence à la figure 1 pour supporter par les ventouses 5 le pavillon 1 sous la structure mobile de support 3 et déplacer à l'aide du robot le pavillon 1 entre les deux côtés de caisse 2 du véhicule préalablement assemblés sur le soubassement du véhicule lors du ferrage sur une ligne de production.

Ainsi, tous les éléments communs aux dispositifs des figures 1 et 2 ne seront pas à nouveau décrits en détails.

Selon l'invention, la structure 3 de support du pavillon 1 comprend deux parties 10 solidaires de cette structure et agencées de manière à positionner transversalement le pavillon 1 entre les deux bords supérieurs des arches 4 des côtés de caisse 2 du véhicule en venant en appui, lors de la descente du pavillon 1 entre les deux côtés de caisse 2, sur deux zones rigides respectivement des deux côtés de caisse 2.

De préférence, chaque partie 10 de positionnement transversal du pavillon 1 comprend deux griffes rigides parallèles 11 solidaires de l'extrémité d'un bras rigide 12 dont l'extrémité opposée est rigidement fixée à un longeron latéral 3b de la structure de support 3.

Chaque griffe 11 comprend une partie rectiligne 11 a amoviblement fixée, par exemple par des boulons, à une plaque rigide 13 solidaire de l'extrémité du bras rigide 12 de façon que la partie rectiligne 11a de chaque griffe s'étende sensiblement perpendiculairement au plan passant par les traverses 3a et longerons 3b de la structure de support 3 et sous cette dernière. En outre, chaque griffe 11 comporte une partie d'extrémité inférieure 11 b recourbée intérieurement, c'est-à-dire vers le longeron 3b de support du bras rigide 12. Ce dernier peut être amoviblement fixé au longeron correspondant 3b par des boulons.

Les deux bras de support 12 des griffes 11 s'étendent de part et d'autre des longerons latéraux 3b de la structure de support 3 et sont disposés dans un même plan perpendiculaire au plan passant par les traverses et longerons 3a, 3b de la structure de support 3. En outre, les deux bras 12 peuvent s'étendre perpendiculairement du longeron correspondant 3b, c'est-à-dire qu'ils occupent une position horizontale lors du positionnement du pavillon 1 entre les deux côtés de caisse 2, ou comme représenté, ils sont inclinés vers le bas relativement à la structure de support 3. Les griffes 11 sont disposées symétriquement au plan contenant les deux bras de support 12.

Les deux griffes 11 de chaque paire sont aptes à venir en appui, lors de la descente du pavillon 1 entre les deux côtés de caisse 2, respectivement sur deux feuillures rigides 14a situées de part et d'autre du pied milieu correspondant 14 du côté de caisse 2 et qui constituent une zone rigide d'appui des parties d'extrémité recourbées 11 b des griffes de positionnement 11.

Le positionnement du pavillon 1 entre les deux côtés de caisse 2 suivant une direction transversale du véhicule ressort déjà de la description qui précède et va être maintenant expliqué.

Le robot manipule la structure 3 de support du pavillon 1 pour disposer ce dernier au-dessus des deux côtés de caisse 2 préalablement assemblés sur le soubassement d'un véhicule à un poste de ferrage de la ligne de production. Puis le robot 2 descend la structure de support 3 pour la positionner entre les deux arches 4 des deux côtés de caisse 2 de manière à amener tout d'abord les griffes 11 en appui, par leurs extrémités inférieures recourbées 11 b, respectivement sur les feuillures 14a des pieds milieu 14 des côtés de caisse 2 pour assurer le positionnement en direction transversale du pavillon 1 relativement aux côtés de caisse 2 sans risque de déformation grâce aux zones d'appui rigides des griffes 11 constituées par les feuillures 14a. Ensuite, les cales 7 des paires 6 de la structure de support 3 complètent le positionnement en direction transversale du pavillon 1 relativement aux côtés de caisse 2 en venant en appui sans effort excessif sur les bords supérieurs des arches 4 des côtés de caisse 2 et les flans 8a des gorges d'enjoliveur 8 du pavillon 1, évitant ainsi des déformations des zones d'appui relativement peu rigides constitués par les flans 8a et les bords supérieurs des arches 4.

Une fois effectué le positionnement du panneau 1 entre les deux côtés de caisse 2, le pavillon 1 peut ensuite être soudé aux arches 4 des côtés de caisse à un poste suivant.

Les parties d'appui auxiliaires constituées par les griffes 11 pour assurer une aide au positionnement en direction transversale du pavillon 1 relativement aux deux côtés de caisse 2 d'un véhicule en venant en contact avec des zones plus rigides de carrosserie du véhicule constituées dans le cas présent par les feuillures des pieds milieu 14 des côtés de caisse 2, améliorent non seulement le positionnement en direction transversale, mais également la qualité d'aspect sur le véhicule au montage en réduisant les défauts d'alignement des gorges 8 pour enjoliveurs de pavillon 1.

L'invention permet ainsi la suppression, à l'atelier de ferrage, du temps de retouche qui était lié aux déformations issues des cales 7 de centrage du pavillon 1 venant en appui sur des zones peu rigides des côtés d'habitacle 2 et des gorges d'enjoliveurs du pavillon. L'invention évite également la création de défauts non retouchables qui donnaient au constructeur une image de jeu d'assemblage mal maîtrisé des pièces de véhicule lors du ferrage.

## Revendications

1. Dispositif de manipulation et de positionnement d'un pavillon (1) entre deux côtés de caisse (2) d'un véhicule, tel qu'un véhicule automobile, comprenant une structure mobile (3) de support du pavillon (1) permettant de positionner le pavillon (1) entre les deux côtés de caisse (2) au niveau des bords supérieurs de leurs arches respectives (4), la structure (3) de support du pavillon (1) comprenant deux parties (11,12) permettant de positionner transversalement le pavillon (1) entre les deux bords supérieurs des arches (4) de côtés de caisse (2) en venant en appui sur deux zones rigides (14a) respectivement des deux côtés de caisse (2), **caractérisé en ce que** chaque partie de positionnement transversal du pavillon comprend deux griffes rigides (11) fixées à la structure (3) de support du pavillon (1) et vient en appui respectivement sur deux feuillures (14a) formant une zone rigide et situées de part et d'autre du pied milieu (14) du côté de caisse correspondant(2) lorsque la structure de support (3) positionne le pavillon (1) entre les deux bords supérieurs des arches (4) de côtés de caisse (2).

2. Dispositif selon la revendication 1, **caractérisé en ce que** chaque paire de griffes rigides (11) est fixée à l'extrémité d'un bras rigide (12) solidaire de la structure (3) de support du pavillon (1) et s'étend sensiblement perpendiculairement à la structure (3).

3. Dispositif selon la revendication 2, **caractérisé en ce que** chaque griffe (11) comprend une partie rectiligne (11 a) solidaire de l'extrémité du bras rigide correspondant (12) en s'étendant sensiblement perpendiculairement à la structure de support (3) et une partie d'extrémité inférieure (11b) recourbée intérieurement.

4. Dispositif selon l'une des revendications 1 à 3, **caractérisé en ce que** la structure (3) de support du pavillon (1) comprend en outre des cales verticales (7) de positionnement transversal du pavillon (1) venant en appui, pour chaque côté de caisse (2) et le long de celui-ci, contre le bord supérieur de l'arche (4) du côté de caisse (2) et le flan (8a) d'une gorge d'enjoliveur (8) du pavillon (1) après que les deux parties (11) de positionnement transversal du pavillon (1) ont été amenées en appui sur les deux zones rigides (14a) respectivement des deux côtés de caisse (2).

5. Dispositif selon l'une des revendications 1 à 4, **caractérisé en ce qu'**il comprend un robot de manipulation de la structure mobile (3) de support du pavillon (1) pour positionner le pavillon (1) entre les deux bords supérieurs des arches (4) des côtés de caisse (2) du véhicule.

6. Procédé de manipulation et de positionnement sur une ligne d'assemblage d'un pavillon (1) entre deux côtés de caisse (2) solidaires d'un soubassement d'un véhicule, tel qu'un véhicule automobile, utilisant le dispositif tel que défini dans l'une quelconque des revendications 1 à 5, **caractérisé en ce qu'**il consiste, à l'aide du robot, à déplacer et positionner la structure de support (3) du pavillon (1) au-dessus des deux côtés de caisse (2) du véhicule, descendre la structure de support (3) de manière à disposer le pavillon (1) entre les deux bords supérieurs des arches (4) des côtés de caisse (2) et amener les deux parties de positionnement (14a) en appui sur les deux zones rigides (14a) respectivement des deux côtés de caisse (2) pour positionner transversalement le pavillon (1) entre les deux bords supérieurs des arches (4) des côtés de caisse (2), chaque partie de positionnement transversal du pavillon comprenant deux griffes rigides (11) fixées à la structure (3) de support du pavillon (1) et venant en appui respectivement sur deux feuillures (14a) formant une zone rigide et situées de part et d'autre du pied milieu (14) du côté de caisse correspondant(2) lorsque la structure de support (3) positionne le pavillon (1) entre les deux bords supérieurs des arches (4) de côtés de caisse (2).

## Patentansprüche

1. Vorrichtung zum Handhaben und Positionieren eines Dachs (1) zwischen zwei Seiten der Karosserieseiten (2) eines Fahrzeugs, wie zum Beispiel eines Kraftfahrzeugs, die eine bewegliche Tragstruktur (3) des Dachs (1) umfasst, die es erlaubt, das Dach (1) zwischen den zwei Karosserieseiten (2) im Bereich der oberen Ränder ihrer jeweiligen Bögen (4) zu positionieren, wobei die Tragstruktur (3) des Dachs (1) zwei Teile (11, 12) umfasst, die es erlauben, das Dach (1) quer zwischen den zwei oberen Rändern der Bögen (4) von Karosserieseiten (2) zu positionieren, indem sie jeweils auf zwei starren Zonen (14a) der zwei Karosserieseiten (2) zum Aufliegen kommen, **dadurch gekennzeichnet, dass** jeder Querpositionierungsteil des Dachs zwei starre Klauen (11) umfasst, die an der Tragstruktur (3) des Dachs (1) befestigt sind und jeweils zum Aufliegen auf zwei Falzen (14a) kommen, die eine starre Zone bilden und zu jeder Seite des Mittenständers (14) auf der entsprechenden Karosserieseite (2) liegen, wenn die Tragstruktur (3) das Dach (1) zwischen den zwei oberen Rändern der Bögen (4) von Karosserieseiten (2) positioniert.

2. Vorrichtung nach Anspruch 1, **dadurch gekennzeichnet, dass** jedes Paar steifer Klauen (11) an dem Ende eines starren Arms (12), der mit der Tragstruktur (3) des Dachs (1) fest verbunden ist und sich im Wesentlichen senkrecht zu der Struktur (3) erstreckt, verbunden ist.

3. Vorrichtung nach Anspruch 2, **dadurch gekennzeichnet, dass** jede Klaue (11) einen geradlinigen Teil (11a) umfasst, der fest mit dem Ende des entsprechenden starren Arms (12) verbunden ist, indem er sich im Wesentlichen senkrecht zu der Tragstruktur (3) erstreckt, und einen unteren Endteil (11b), der innen zurückgebogen ist.

4. Vorrichtung nach einem der Ansprüche 1 bis 3, **dadurch gekennzeichnet, dass** die Tragstruktur (3) des Dachs (1) außerdem vertikale Keile (7) zum Querpositionieren des Dachs (1), das zum Aufliegen kommt, für jede Karosserieseite (2) und entlang dieser umfasst, gegen den oberen Rand des Bogens (4) der Karosserieseite (2) und die Flanke (8a) einer Zierleistenhohlkehle (8) des Dachs (1), nachdem die zwei Querpositionierungsteile (11) des Dachs (1) zum Aufliegen jeweils auf die zwei starren Zonen (14a) der zwei Karosserieseiten (2) gebracht wurden.

5. Vorrichtung nach einem der Ansprüche 1 bis 4, **dadurch gekennzeichnet dass** sie einen Handhabungsroboter der beweglichen Tragstruktur (3) des Dachs (1) umfasst, um das Dach (1) zwischen den zwei oberen Rändern der Bögen (4) der Karosserieseiten (2) des Fahrzeugs zu positionieren.

6. Verfahren zum Handhaben und Positionieren auf einer Montagelinie eines Dachs (1) zwischen zwei Karosserieseiten (2), die fest mit einem Unterbau eines Fahrzeugs, wie zum Beispiel eines Kraftfahrzeugs, verbunden sind, indem die wie in einem der Ansprüche 1 bis 5 definierte Vorrichtung verwendet wird, **dadurch gekennzeichnet, dass** es darin besteht, mit Hilfe des Roboters die Tragstruktur (3) des Dachs (1) oberhalb der zwei Karosserieseiten (2) des Fahrzeugs zu verlagern und zu positionieren, die Tragstruktur (3) zu senken, so dass das Dach (1) zwischen den zwei oberen Rändern der Bögen (4) der Karosserieseiten (2) angeordnet wird, und die zwei Positionierungsteile (14a) zum Aufliegen auf den zwei starren Zonen (14a) der jeweiligen zwei Karosserieseiten (2) zu bringen, um das Dach (1) quer zwischen den zwei oberen Rändern der Bögen (4) der Karosserieseiten (2) zu positionieren, wobei jeder Querpositionierungsteil des Dachs zwei starre Klauen (11) umfasst, die an der Tragstruktur (3) des Dachs (1) befestigt sind, und die zum Aufliegen jeweils auf zwei Falzen (14a), die eine starre Zone bilden und zu beiden Seiten des Mittenständers (14) der entsprechenden Karosserieseite (2) liegen, kommen, wenn die Tragstruktur (3) das Dach (1) zwischen den zwei oberen Rändern der Bögen (4) der Karosserieseiten (2) positioniert.

## Claims

1. A device for handling and positioning a roof section (1) between two sides of a body shell (2) of a vehicle, such as a motor vehicle, including a movable support structure (3) of the roof section (1) permitting the roof section (1) to be positioned between the two sides of the body shell (2) at the level of the upper edges of their respective arches (4), the support structure (3) of the roof section (1) including two parts (11, 12) permitting the roof section (1) to be positioned transversely between the two upper edges of the arches (4) of sides of body shell (2) coming to rest on two rigid zones (14a) respectively of the two sides of body shell (2),
**characterized in that**
each transverse positioning part of the roof section includes two rigid claws (11) fixed to the support structure (3) of the roof section (1), and comes to rest respectively on two grooves (14a) forming a rigid zone and situated on either side of the centre pillar (14) of the corresponding side of body shell (2) when the support structure (3) positions the roof section (1) between the two upper edges of the arches (4) of sides of body shell (2).

2. The device according to Claim 1, **characterized in that** each pair of rigid claws (11) is fixed at the end of a rigid arm (12) integral with the support structure (3) of the roof section (1) and extends substantially perpendicularly to the structure (3).

3. The device according to Claim 2, **characterized in that** each claw (11) includes a rectilinear part (11a) integral with the end of the corresponding rigid arm (12), extending substantially perpendicularly to the support structure (3) and a lower end part (11b) curved inwardly.

4. The device according to one of Claims 1 to 3, **characterized in that** the support structure (3) of the roof section (1) further includes vertical shims (7) for transverse positioning of the roof section (1) coming to rest, for each side of body shell (2) and along the latter, against the upper edge of the arch (4) of the side of body shell (2) and the flank (8a) of a trim groove (8) of the roof section (1) after the two parts (11) for transverse positioning of the roof section (1) have been brought to rest on the two rigid zones (14a) respectively of the two sides of body shell (2).

5. The device according to one of Claims 1 to 4, **characterized in that** it includes a robot for handling the movable support structure (3) of the roof section (1) to position the roof section (1) between the two upper edges of the arches (4) of the sides of body shell (2) of the vehicle.

6. A method for handling and positioning on an assembly line of a roof section (1) between two sides of body shell (2) integral with a sub-frame of a vehicle, such as a motor vehicle, using the device as defined in any one of Claims 1 to 5, **characterized in that** it consists, by means of the robot, in moving and positioning the support structure (3) of the roof section (1) above the two sides of body shell (2) of the vehicle, lowering the support structure (3) so as to dispose the roof section (1) between the two upper edges of the arches (4) of the sides of body shell (2) and to bring the two positioning parts (14a) to rest on the two rigid zones (14a) respectively of the two sides of body shell (2) to position the roof section (1) transversely between the two upper edges of the arches (4) of the sides of body shell (2), each part for transverse positioning of the roof section including two rigid claws (11) fixed to the support structure (3) of the roof section (1) and coming to rest respectively on two grooves (14a) forming a rigid zone and situated on either side of the centre pillar (14) of the corresponding side of body shell (2) when the support structure (3) positions the roof section (1) between the two upper edges of the arches (4) of sides of body shell (2).
